# EUROPEAN PATENT APPLICATION

(11) **EP 4 006 428 A1**
(43) Date of publication of application: **01.06.2022**
(21) Application number: 21208810.8
(22) Date of filing: 17.11.2021
(51) Int. Cl.: F24C 7/08, G01K 1/14

(54) **THERMOSTAT PROBE RETAINER FOR A HOUSEHOLD APPLIANCE, AND HOUSEHOLD APPLIANCE COMPRISING A THERMOSTAT PROBE FIXED BY A RETAINER**

(30) Priority: 27.11.2020 TR 202019130
(71) Applicant: BSH Hausgeräte GmbH, 81739 München (DE)
(72) Inventor: Çelik, Ömer, Istanbul (TR); Çelik, Ulas, Istanbul (TR)

(57) **Abstract**

A thermostat probe retainer (1) for a cooking appliance comprising; a body (3) having longitudinal shape with least two holes on it, for carrying the thermostat probe (5), at least one connection element (6), for fixing the body (3) to the cavity wall (C) of the cooking appliance (1). As an improvement, the body (3) has at least one paddle (4) which is extended longitudinally from the body (3) for supporting and tightening the probe (5) and at least one nail (7) which is angled from the body (3) with t junction and protrudes from the cavity wall (C) of the appliance (1) for mounting the retainer (2) and the appliance (1).

## Description

### TECHNICAL FIELD

The present invention relates to a thermostat probe retainer for a household appliance, especially a domestic cooking appliance.

### PRIOR ART

Thermostat retainers are used for fixing oven tap and switch thermostat probes inside oven cavity.

The document numbered DE19834643C1 discloses an oven with an oven muffle, in which an elongated support part is held along a wall of the oven muffle, which has a mounting section for holding a sensor tube or a sensor on the muffle wall, as well as a method for fastening this particularly elongated support part in the oven grump.

The invention provides an additional improvement, an additional advantage or an alternative to the prior art.

### BRIEF DESCRIPTION OF THE INVENTION

An object of the present invention is to provide a thermostat probe retainer for a domestic cooking appliance for providing easy assembly, practical usage and cost advantages during the production process.

The invention, to achieve the abovementioned purpose, relates to a thermostat probe retainer for a cooking appliance comprising; a body, having longitudinal shape with least two holes on it, for carrying the thermostat probe, at least one connection element for fixing the body to the cavity wall of the cooking appliance, The body has at least one paddle which is extended longitudinally from the body for supporting and tightening the probe and at least one nail which is angled from the body with t junction and protrudes from the cavity wall of the appliance, for mounting the retainer and the appliance.

Accordingly, a household cooking appliance comprising a thermostat probe retainer is provided. Cooking appliance comprises, at least six cavity walls, confining the cooking appliance wherein the cooking is proceeded, a thermostat probe to be fixed to the cavity wall for determining the temperature inside, a thermostat probe retainer for holding the thermostat probe, a connection element for mounting the retainer to the cavity wall of the appliance, an assembly opening for inserting the retainer to the cavity wall of the appliance. Furthermore, the retainer further comprising a body for holding the probe, a paddle with an extending part which is angled from the body and a head part which is assembled to the extending part and positioned parallel to the body and a gap in the center to provide the flexibility of the paddle, a nail which is angled from the body with t junction and protrudes from the cavity wall of the appliance inside the assembly opening for combining the retainer and the appliance.

In a possible embodiment of the invention, the paddle has an extending part, a head part and a gap. Thus, tightening property of the retainer is increased by means of the extending part, durability of the system is developed by means of the head part and flexibility of the retainer is increased by means of the gap in the middle of the joint area of extending part and body.

In a possible embodiment of the invention, the extending part is angled from the body. Thus, tightening property of the retainer is increased.

In a possible embodiment of the invention, the head part is assembled to the extending part and positioned parallel to the body. Thus, durability and lifetime of the retainer is developed by means of the head part with increasing contact area between thermostat probe and retainer.

In a possible embodiment of the invention, the paddle has a gap in the center for increasing the flexibility and elasticity.

In a possible embodiment of the invention, the nail has a flat surface and vertically mounted to the body. Thus, easy mounting of the retainer to the cavity wall is provided by inserting the nail to the assembly opening.

In a possible embodiment of the invention, the retainer (2) is manufactured with tool forming method. Thus, easy assembly and cost advantages is provided during production stage of the retainer.

In a possible embodiment of the invention, body is coated with stainless steel material. Thus, corrosion is prevented and lifetime of the retainer is increased. Additionally, steel is biocompatible and not causes any health problem while exposed to heat.

In a possible embodiment of the invention, the cooking oven is a household cooking oven and/or a baking oven, a grill or a gas cooker.

In this context, with the indications "front", "upper", "below", "top", "bottom" etc. the positions and orientations given for intended use and intended arrangement of the cooking device and for a user then standing in front of the cooking device in a closed position and viewing in the direction of the device are indicated.

### BRIEF DESCRIPTION OF THE FIGURES

The figures, whose brief explanations are herewith provided, are solely intended for providing a better understanding of the present invention and are as such not intended to define the scope of protection or the context in which said scope is to be interpreted in the absence of the description.
Fig.1 represents a cooking appliance of the present invention with a thermostat probe retainer and thermostat probe in it.
Fig. 2 represents the expanded view of thermostat retainer with thermostat probe therein.
Fig. 3 represents the perspective view of the thermostat probe retainer for a cooking appliance of the present invention.
Fig. 4 represents the back side view of the thermostat probe retainer for a cooking appliance of the present invention.

### DETAILED DESCRIPTION OF THE FIGURES

Referring to the figures summarized above, the present invention proposes a cooking appliance comprising: at least six cavity walls (C), confining the cooking appliance (1) wherein the cooking is proceeded, a thermostat probe (5), to be fixed to the cavity wall (C) for determining the temperature inside, a thermostat probe retainer (2), for holding the thermostat probe (5), a connection element (6), for mounting the retainer (2) to the cavity wall (C) of the appliance (1), an assembly opening (A), for inserting the retainer (2) to the cavity wall (C) of the appliance (1). Additionally, said thermostat probe retainer (2) for a cooking appliance (1) further comprising; a body (3) having longitudinal shape with least two holes on it, for carrying the thermostat probe (5), at least one connection element (6), for fixing the body (3) to the cavity wall (C) of the cooking appliance (1). The body (3) has at least one paddle (4), which is extended longitudinally from the body (3) for supporting and tightening the probe (5) and at least one nail (7), which is angled from the body (3) with t-junction and protrudes from the cavity wall (C) of the appliance (1) for mounting the retainer (2) and the appliance (1).

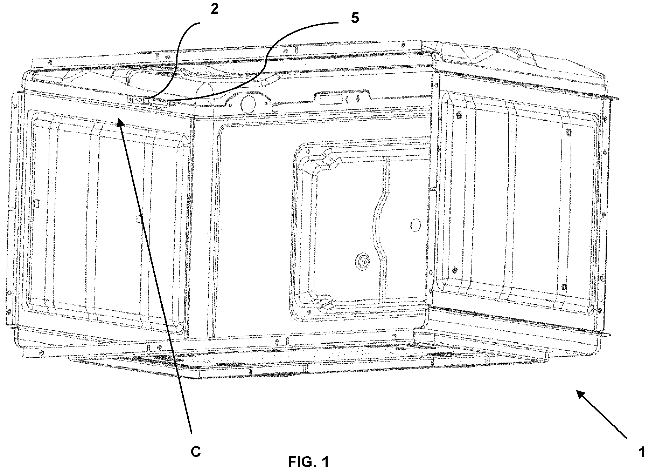

Referring now to the figures of the drawings in detail and first, particularly to Fig. 1 thereof, there is shown a cooking appliance (1) with thermostat probe retainer (2) and the thermostat probe (5) therein. The retainer (2) could be anywhere in the cavity wall (C) inside of the appliance (1).

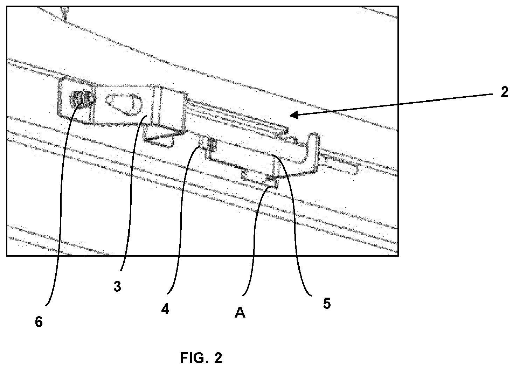

The thermostat retainer (2) inside of the cavity wall (C) of the cooking appliance (1) can be seen in Fig. 2. A thermostat probe (5) is inserted to the retainer (1) and the retainer (2) is fixed onto the cavity wall (C) from the screw hole on the body (3) with connection elements (6), particularly with screws. According to the present invention, it is therefore possible for an assembly person to assemble the retainer (2) inside the cooking appliance easily. The thermostat probe (5) which is inserted to the retainer (2) can be a capillary tube, in particular a temperature sensor that is inserted into a protective tube.

Moreover, there should be an assembly opening (A) on the cavity wall (C) whereinto the nail (7) is inserted for fixing the retainer (2) to the cooking appliance (1).

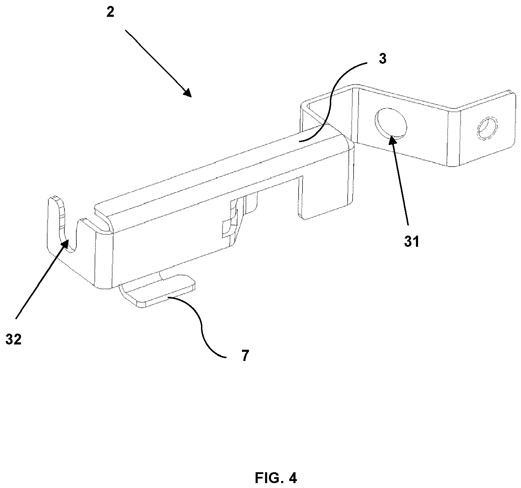

During assembly of the retainer (2) to the cavity wall (C), elongated nail (7) part which is angled from the body (3) with t junction, protrudes from the cavity wall (C) through by introducing the corresponding assembly opening (A) which should probably be the same opening size with the nail (7) which can be seen from Fig.4. The assembly opening (A) can be produced during the manufacturing stage of the cavity for a cooking appliance.

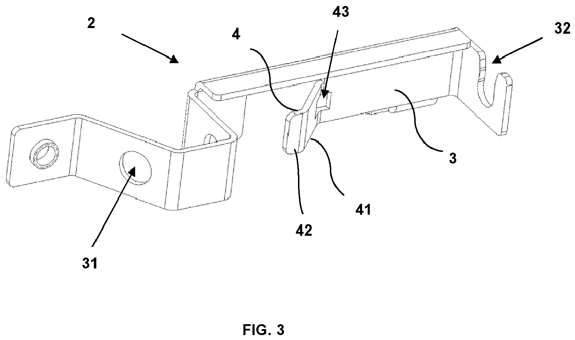

As can be seen from Figs.3 to 4, the retainer has a body (3) and a paddle (4) which is produced an extending part (41), a head part (42) and a gap (43). The extending part is extended from the body and directly in combination with body. The gap (43) is is placed in the center of junction part of the body (3) and the extending part (41). This gap (43) provides the paddle (4) flexibility for holding and tightening of the thermostat probe (5). Furthermore, the head (42) is extended from the extending part (41) with an angle as being parallel to the body (3). The head part (42) will directly be in combination with thermostat probe (5) and will push the said probe (5) through the body (3) for increase the tightening.

The body (3) is manufactured from stainless steel and/or heat resistant thermoplastic material for increasing the durability and lifetime. Furthermore, the thermostat probe retainer (2) has a cost advantage regarding existing designs and is safer when compared to existing permanent fixing type ones. Also the present thermostat probe retainer (2) has smart probe fixing details to assemble and disassemble the thermostat probe (5) easily in case of needed.

### REFERENCE LIST

1. Cooking Appliance
2. Retainer
3. Body
4. Paddle
   41. Extending part
   42. Head part
   43. Gap
5. Thermostat Probe
6. Connection Element
7. Nail
   A. Assembly opening
   C. Cavity Wall

## Claims

1. A thermostat probe retainer (2) for a cooking appliance (1) comprising;
a body (3) having longitudinal shape with least two holes on it, for carrying the thermostat probe (5),
at least one connection element (6), for fixing the body (3) to the cavity wall (C) of the cooking appliance (1)
and **characterized in that**, the body (3) has at least one paddle (4), which is extended longitudinally from the body (3) for supporting and tightening the probe (5) and
at least one nail (7), which is angled from the body (3) with t junction and protrudes from the cavity wall (C) of the appliance (1) for mounting the retainer (2) and the appliance (1).

2. The thermostat probe retainer (2) for a cooking appliance (1) according to the any one of the preceding claims, wherein the paddle (4) has an extending part (41), a head part (42) and a gap (43).

3. The thermostat probe retainer (2) for a cooking appliance (1) according to the any one of the preceding claims, wherein the extending part (41) is angled from the body (3).

4. The thermostat probe retainer (2) for a cooking appliance (1) according to the any one of the preceding claims, wherein the head part (42) is assembled to the extending part (41) and positioned parallel to the body (3).

5. The thermostat probe retainer (2) for a cooking appliance (1) according to the any one of the preceding claims, wherein the paddle (4) has a gap (43) in the center for increasing the flexibility and elasticity.

6. The thermostat probe retainer (2) for a cooking appliance (1) according to the any one of the preceding claims, wherein the nail (7) has a flat surface and vertically mounted to the body (3).

7. The thermostat probe retainer (2) for a cooking appliance (1) according to the any one of the preceding claims, wherein the retainer (2) is manufactured with tool forming method.

8. The thermostat probe retainer (2) for a cooking appliance (1) according to the any one of the preceding claims, wherein the retainer (2) is made from stainless steel material.

9. A cooking appliance (1) comprising;
at least six cavity walls (C), confining the cooking appliance (1) wherein the cooking is proceeded,
a thermostat probe (5), to be fixed to the cavity wall (C) for determining the temperature inside,
a thermostat probe retainer (2), for holding the thermostat probe (5),
a connection element (6), for mounting the retainer (2) to the cavity wall (C) of the appliance (1),
an assembly opening (A), for inserting the retainer (2) to the cavity wall (C) of the appliance (1),
and **characterized in that** the retainer (2) further comprising a body (3) for holding the probe (5), a paddle (4) with an extending part (41) which is angled from the body (3) and a head part (42) which is assembled to the extending part (41) and positioned parallel to the body (3) and a gap (43) in the center to provide the flexibility of the paddle (4), a nail (7) which is angled from the body (3) with t junction and protrudes from the cavity wall (C) of the appliance (1) inside the assembly opening (A) for combining the retainer (2) and the appliance (1).

10. A cooking appliance according to any one of the preceding claims, wherein the domestic cooking appliance (1) is a baking oven, a grill or a gas cooker.
